Europäisches Patentamt

European Patent Office

Office européen des brevets

(19)

(11) Veröffentlichungsnummer: **0 107 084**
**A2**

(12) **EUROPÄISCHE PATENTANMELDUNG**

(21) Anmeldenummer: 83109629.2

(22) Anmeldetag: 27.09.83

(51) Int. Cl.³: **G 06 K 9/03, G 09 G 1/16**

(30) Priorität: 29.09.82 DE 3236059

(43) Veröffentlichungstag der Anmeldung: 02.05.84
Patentblatt 84/18

(84) Benannte Vertragsstaaten: **AT BE CH DE FR GB IT LI NL SE**

(71) Anmelder: **COMPUTER GESELLSCHAFT KONSTANZ MBH, Max-Strohmeyer-Strasse 116, D-7750 Konstanz (DE)**

(72) Erfinder: **Passauer, Heinz-Peter, Ing.-grad., Am Briel 49, D-7750 Konstanz (DE)**

(74) Vertreter: **Mehl, Ernst, Dipl.-Ing. et al, Postfach 22 01 76, D-8000 München 22 (DE)**

(54) Steuereinrichtung für ein Sichtgerät einer Texterfassungseinrichtung.

(57) Bei der automatischen Texterfassung können die von einem Zeichenleser (5) gelesenen Zeichen auf der Anzeigeeinheit (22) eines Datensichtgerätes wiedergegeben und so von einer Bedienperson kontrolliert werden. Bei alphanumerischen Zeichen, die vom Zeichenleser (5) eindeutig identifiziert werden, erzeugt der Zeichenleser (5) einen Zeichencode, mit welchem über einen Zeichengenerator (6) ein Videoteil (19) angesteuert wird. Nicht identifizierte Zeichen (Graphikzeichen) werden als Bitmuster in einen Graphikspeicher (18) eingeschrieben, dessen Inhalt zum Ansteuern des Videoteiles (19) bei gleichzeitiger Unterdrückung der Ausgangssignale des Zeichengenerators (6) ausgelesen wird. Mit dieser Art der Darstellung werden eine hohe Auflösung der Graphikzeichen und ein ergonomisch günstiges Größenverhältnis zu den alphanumerischen Zeichen erreicht.

0107084

Computer Gesellschaft   - 1 -   Unser Zeichen
Konstanz mbH
Max-Stromeyer-Str. 116   VPA  82 P 5001 EUR
7750  Konstanz

Steuereinrichtung für ein Sichtgerät einer Texterfassungseinrichtung

Die Erfindung betrifft eine Steuerschaltung für ein
Sichtgerät einer Texterfassungseinrichtung nach dem
Oberbegriff des Patentanspruches 1.

Zur automatischen Texterfassung von beschriebenen Vorlagen, insbesondere bei Massenschriftgut, wie beispielsweise Bankbelegen, können Zeichenleser eingesetzt werden, welche die Vorlage optisch abtasten und
die dabei gelesenen Daten in codierter Form an eine
Datenverarbeitungsanlage weiterleiten. Aus der Vielzahl von möglichen Zeichen kann jedoch nur eine begrenzte, in einem Zeichenvorrat vorgegebene Anzahl von Zeichen selbständig verarbeitet werden. Dieser Zeichenvorrat besteht beispielsweise aus alphanumerischen Zeichen mit spezifischen Merkmalen. Davon abweichende Zeichen, die im folgenden graphische Zeichen genannt werden, kann die Texterfassungseinrichtung nicht identifizieren. Sie weist sie als nicht lesbar zurück.

Für diesen Fall kann das Eingreifen einer Bedienperson
vorgesehen sein, welche den Lesevorgang am Bildschirm
eines Datensichtgerätes überwacht. Dort werden sowohl
die erkannten Zeichen als auch ein Graphikbild des zurückgewiesenen Zeichens wiedergegeben. Ist aufgrund des
graphischen Musters oder aus dem Kontext die Bedeutung
des Zeichens zu erkennen, so wird ihm mittels einer Eingabevorrichtung ein alphanumerisches Zeichen aus dem

Sta 1 Stl / 22.07.83 vorgegebenen Zeichenvorrat zugeordnet. Daneben eignet sich der Graphikbereich des Bildschirms auch dazu, Vorlagen mit handschriftlichen Unterschriften wiederzugeben, beispielsweise um den Schriftzug zu überprüfen.

Ein Graphikbild entsteht bekanntlich durch die Aneinanderreihung von Texteinheiten, wobei die kleinste Texteinheit aus einem innerhalb eines Zeichenfeldes wiedergebbaren Alphanumerikzeichen besteht. Jede Texteinheit entsteht durch Kombination von kleinsten Bildeinheiten, die aus hell-/dunkelgesteuerten Bildpunkten innerhalb eines vorgegebenen Punktrasters bestehen.

Zur Wiedergabe von graphischen Zeichen ist bekannt, mehrere alphanumerische Zeichen miteinander zu kombinieren. Die Größe einer Texteinheit bestimmt dabei folglich die Auflösung. Eine hohe Auflösung, wie sie für den oben beschriebenen Zweck erforderlich ist, hat dabei zwangsläufig einen erheblichen Größenunterschied zwischen alphanumerischen und graphischen Zeichen zur Folge. Eine derartige Zeichendarstellung auf dem Bildschirm leidet nicht nur unter der gewünschten Übersichtlichkeit, sie führt auch zu einer Belastung des Betrachters, weil sich das Auge bei jedem Wechsel zwischen alphanumerischen und graphischen Zeichen beträchtlich umstellen muß. Dies kann besonders bei längerem Arbeiten sehr ermüdend sein.

Aus "Siemens Components" 19 (1981), Heft 2, Seite 46, ist eine Bildschirmsteuerung bekannt, mit welcher graphische Zeichen mittels einer sogenannten Dickstrich-Pseudographik erzeugt werden können. Dabei wird ein Zeichenfeld in acht Segmente aufgeteilt, welche individuell ansteuerbar sind.

0107084

- 3 - VPA 82 P 5001

Der vorliegenden Erfindung liegt nun die Aufgabe zugrunde, eine Texterfassungseinrichtung der oben genannten Art in der Weise zu verbessern, daß graphische Zeichen mit hoher Auflösung und in einem ergonomisch günstigen Verhältnis zu den alphanumerischen Zeichen darstellbar sind.

Diese Aufgabe wird erfindungsgemäß durch die kennzeichnenden Merkmale des Patentanspruches 1 gelöst. Neben einem einfachen Aufbau zeichnet sich die erfindungsgemäße Steuerschaltung dadurch aus, daß für die Wiedergabe graphischer Zeichen keine eigene Kontrolleinheit erforderlich ist. Die graphischen Zeichen werden innerhalb eines Graphikbereichs wiedergegeben, dessen Größe und Lage innerhalb der Wiedergabe auf einfache Weise wählbar ist. Das Größenverhältnis zwischen alphanumerischen und graphischen Zeichen beträgt 1 : 2 und erfüllt somit sehr gut die Anforderungen für eine bedienungsfreundliche Bildwiedergabe.

Weiterbildungen der Erfindung ergeben sich aus den Unteransprüchen.

Im folgenden wird ein Ausführungsbeispiel der Erfindung anhand der Zeichnung näher beschrieben. Dabei zeigen

FIG 1   einen Ausschnitt aus einem Bildschirm eines Sichtgerätes mit zwei aus Bildpunkten zusammengesetzten Zeichen

FIG 2   ein Blockschaltbild einer Steuerschaltung für ein Datensichtgerät zur kombinierten Wiedergabe von alphanumerischen und graphischen Zeichen.

FIG 3   Einzelheiten des Schaltbildes nach FIG 2.

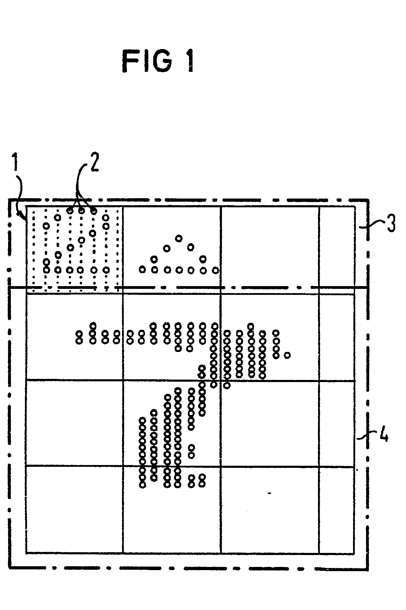

FIG 1 zeigt schematisch einen Ausschnitt einer Bildwiedergabe auf einem Bildschirm mit einem in Zeichenfelder 1 unterteilten Punktraster und mit hellgesteuerten Bildpunkten 2. Innerhalb eines Zeichenfeldes 1 liegen 12 Mikrozeilen mit jeweils acht Bildpunkten, wobei der besseren Übersicht wegen nur das Punktraster im ersten Zeichenfeld 1 dargestellt ist. Die Zeichenfelder sind in Reihen und Spalten angeordnet, wobei die erste Reihe einem Alphanumerikbereich 3 und die zweite bis vierte Reihe einem Graphikbereich 4 zugeordnet sind.

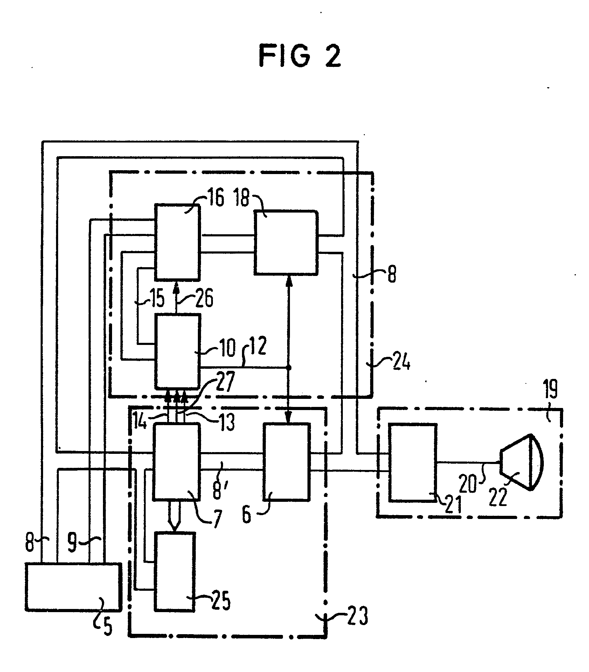

Im Alphanumerikbereich 3 sind alphanumerische Zeichen mit einer bestimmten Eigenart darstellbar, wie sie beispielsweise durch die von einem Alphanumerik-Zeichengenerator 6 (siehe FIG 2) bestimmten Buchstaben, Ziffern und Sonderzeichen vorgegeben sind. Die in den beiden ersten Zeichenfeldern dargestellten Zeichen "2" bzw. " $\triangle$ " sind im Alphanumerikbereich 3 nur in einer einzigen, eindeutig festgelegten Bildpunktkombination darstellbar. Alle Zeichen, die nicht im Zeichenvorrat des Alphanumerik-Zeichengenerators 6 enthalten sind, werden im folgenden graphische Zeichen genannt. Sie sind als graphische Muster durch eine freie Kombination der Bildpunkte im Graphikbereich 4 darstellbar und können mehr als ein Zeichenfeld einnehmen, so daß die Bildpunktauflösung gegenüber den alphanumerischen Zeichen höher sein kann. In dem wiedergegebenen Beispiel enthält der Graphikbereich 4 eine aus einer Vielzahl von Bildpunkten 2 zusammengesetzte "7". Auf diese Weise lassen sich auch andere beliebige Schriftzüge darstellen.

Das Blockschaltbild in FIG 2 enthält einen Zeichenleser 5 und ein Datensichtgerät, das aus Einheiten 23, 24 zum Ansteuern von alphanumerischen bzw. graphischen
Zeichen und aus einem Videoteil 19 besteht.

Der Zeichenleser 5 weist optische Sensoren (nicht
dargestellt) zum Abtasten einer beschriebenen oder
bedruckten Vorlage auf. Die einzelnen Zeichen dieser
Vorlage werden dabei durch eine hoch auflösende Rasterung in ein Bildpunktmuster umgesetzt, aus dem der
Zeichenleser 5 jeweils ein binär codiertes Bildsignal
erzeugt. Ein im Zeichenleser 5 vorgesehener Klassifikator vergleicht dann dieses codierte Bildsignal mit
den Bildmustern aller Zeichen innerhalb des dem Zeichenleser 5 zugeordneten Zeichenvorrats und wählt dasjenige Bildmuster mit der relativ größten Übereinstimmung und damit die entsprechend zugehörige Zeichenklasse aus. Der Zeichenvorrat des Zeichenlesers 5
und der Zeichenvorrat des Alphanumerik-Zeichengenerators 6 müssen nicht identisch sein, es muß jedoch
eine eindeutige Zuordnung gewährleistet sein, damit
je einem gelesenen Zeichen eindeutig ein binär codierter Zeichencode zugeordnet werden kann, der über
einen Datenbus 8 an die Einheit 23 zum Ansteuern
von alphanumerischen Zeichen übertragbar ist. Ist
ein Zeichen nicht identifizierbar, so wird ein Code
für ein Zurückweisungszeichen abgegeben.

Die Einheit 23 ist auf bekannte Weise aus einem Bildwiederholspeicher 25, einer Kontrolleinheit und einem
Alphanumerikzeichengenerator 6 aufgebaut. Die an die
Einheit 23 übertragenen Zeichencodes werden zunächst
im Bildwiederholspeicher 25 zwischengespeichert und
bei der Bildwiedergabe ausgelesen und dem Zeichengenerator 6 zugeführt. Der Zeichengenerator 6 setzt dann
den jeweiligen Zeichencode in ein binär codiertes Zeichensignal und schließlich in ein entsprechendes Videosignal zur Darstellung des jeweiligen Alphanumerikzeichens auf dem Bildschirm um. Die Kontrolleinheit 7
erzeugt ferner für jeden Zeilenhinlauf des Kathodenstrahls der Bildröhre einen Horizontalsynchronisierimpuls, für jede Bildwiederholung einen Vertikalsynchronisierimpuls sowie einen Zeichentakt, welcher die
Größe der Zeichenfelder 1 bestimmt. Die Synchronisierimpulse und die Takte werden jeweils über eine erste,
zweite und dritte Leitung 13, 14, 27 an die Einheit
24 zum Wiedergeben von graphischen Zeichen weitergeleitet.

Diese Einheit 24 besteht aus einem Graphikspeicher 18
mit wahlfreiem Zugriff, aus einer Zählkette 10 und
einer Multiplexeranordnung 16 zum Durchschalten des
Adreßbusses 9 bzw. 15 an den Graphikspeicher 18.
Der Graphikspeicher 18 nimmt über den Datenbus 8 die
Bildsignale vom Zeichenleser 5 auf, welche dem Bildpunktmuster eines graphischen Zeichens entsprechen.
Die Speicheradressierung erfolgt dabei über den Adreßbus 9. Die wortweise Adressierung des Graphikspeichers
18 beim Auslesen erfolgt über einen weiteren Adreßbus
15, der mit der Multiplexeranordnung 16 anstelle des
Adreßbusses 9 an den Graphikspeicher 18 durchgeschaltet wird. Die ausgelesenen Daten werden über den Datenbus 8 unmittelbar an den Videoteil 19 geführt. Die
Speicherkapazität des Graphikspeichers 18 besteht für
das in FIG 1 wiedergegebene Beispiel aus so vielen
Speicherplätzen zur Aufnahme jeweils eines Datenwortes wie zur Wiedergabe von neun Zeichenfeldern zu je
12 Mikrozeilen erforderlich sind. die Leseadresse wird
abhängig vom Horizontalsynchronisierimpuls und vom
Zeichentakt in der Zählkette 10 erzeugt.

Der Videoteil 19 ist auf bekannte Weise aus einer als Bildröhre ausgebildeten Anzeigeeinheit 22 und einem Parallel-Serienwandler 21 aufgebaut. Letzterer ist eingangsseitig mit dem Zeichengenerator 6 und dem Graphikspeicher 18 verbunden. Die von dort eingehenden parallelen Daten werden in ein serielles Datenmuster gewandelt, welches zur Ansteuerung der Anzeigeeinheit 22 über die Videodatenleitung 20 dient.

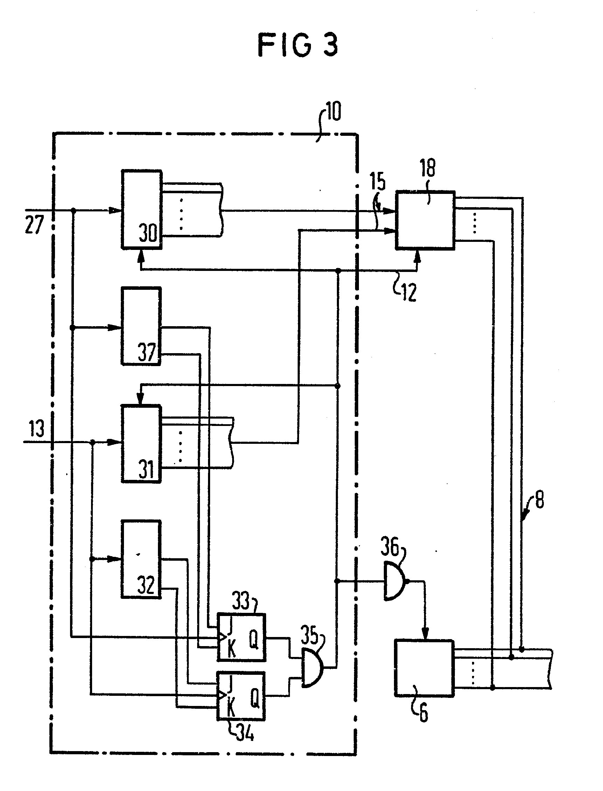

Wie FIG 3 zeigt, besteht die Zählkette 10 aus einem ersten und zweiten Zeichenzähler 30, 37, aus einem ersten und zweiten Zeilenzähler 31, 32, sowie aus einem ersten und zweiten JK-Flipflop 33, 34. Die Eingänge der beiden Zeichenzähler 30, 37 sind mit dem Zeichentakt auf Leitung 27 belegt. Auf die beiden Zeilenzähler 31, 32 ist jeweils der Horizontalsynchronisierimpuls auf Leitung 13 geführt. Die Zeilenzähler 31, 32 sowie die beiden Flipflops 33, 34 sind mit dem Vertikalsynchronisierimpuls, die Zeichenzähler 30, 37 mit dem Horizontalsynchronisierimpuls zurücksetzbar, was jedoch, um die Übersichtlichkeit der Zeichnung nicht zu beeinträchtigen, in FIG 3 nicht dargestellt ist. Die Ausgänge des ersten Zeichenzählers 30 und des ersten Zeilenzählers 31 liegen am Adreßbus 15, welcher über die Multiplexeranordnung 16 an die Adreßeingänge des Graphikspeichers 18 geführt ist. Dabei sind die Ausgänge des ersten Zeilenzählers 31 mit den höherwertigen und die Ausgänge des ersten Zeichenzählers 30 mit den niederwertigen Adreßeingängen verbunden. Über den zweiten Zeilen- und Zeichenzähler 32, 37 ist der Beginn des Graphikbereichs 4 bezüglich der Zeilen- und Zeichenzahl festlegbar. Jeweils nach einer vorgegebenen Zeilen- und Zeichenzahl wird über den J-Eingang des ersten Flipflops 33 bzw. des zweiten Flipflops 34 und über das UND-Glied 35, an welchem eingangsseitig die Ausgänge der beiden Flipflops anliegen, der Graphikspeicher 18, der erste Zeichenzähler 30 und der erste Zeilenzähler 31 aktiviert. Außerdem schaltet die Multiplexeranordnung 16 den Adreßbus 15 durch. Ferner werden - über den Inverter 36 - die Ausgangssignale des Zeichengenerators 6 auf dem Datenbus 8 unterdrückt.

Sobald der erste Zeichenzähler 30 bzw. der erste Zeilenzähler 31 ihren vorgegebenen Endwert erreicht haben, werden über die K-Eingänge des ersten Flipflops 33 bzw. des zweiten Flipflops 34 die Ausgangssignale zurückgesetzt. Das hat zur Folge, daß der Graphikspeicher 18, der erste Zeichenzähler 30 und der erste Zeilenzähler 31 deaktiviert werden. Gleichzeitig werden Ausgangssignale des Zeichengenerators 6 freigegeben.

Zum Festlegen des Anfangspunkts des Graphikbereichs 4, d.h. zum Festlegen der Anfangsadresse des Graphikspeichers 18 kann es auch vorteilhaft sein, die J-Eingänge der Flipflops 33, 34 über den Datenbus 8 anzusteuern. Dabei ist das Flipflop 33 und/oder das Flipflop 34 über einen Decoder mit dem Datenbus 8 verbunden (nicht dargestellt). In diesem Fall erübrigen sich der zweite Zeilenzähler 32 und der zweite Zeichenzähler 37.

Im folgenden wird die Funktion der Steuerung anhand eines Beispiels beschrieben. Es wird dabei davon ausgegangen, daß die zu lesende Vorlage aus einer im Klassifikator des Zeichenlesers 5 enthaltenen, gedruckten "2" und aus einer daneben liegenden, handgeschriebenen und daher nicht im Klassifikator enthaltenen "7" besteht. Nach dem Abtasten der "2" wird durch Vergleich im Klassifikator Übereinstimmung mit dem

0107084

im Zeichenleser 5 definierten Zeichen "2" festgestellt und ein diesem Zeichen zugeordneter Zeichencode erzeugt, welcher über den Datenbus 8 in den Bildwiederholspeicher 25 eingeschrieben wird. Beim Lesen der "7" wird dagegen keine Übereinstimmung mit einem der Zeichen aus dem Zeichenvorrat des Zeichenlesers 5 festgestellt. Daraufhin wird vom Zeichenleser 5 ein binär codiertes Zurückweisungszeichen zur Abspeicherung im Bildwiederholspeicher 25 erzeugt. Das Zurückweisungszeichen gehört ebenfalls zum Zeichenvorrat des Alphanumerik-Zeichengenerators 6 und hat bei seinem Auftreten zur Folge, daß auf dem Bildschirm als Hinweis auf ein zurückgewiesenes Zeichen ein bestimmtes, diesen Zustand kennzeichnendes Alphanumerikzeichen wiedergegeben wird. Das kann beispielsweise ein blinkendes △ an dem Ort im Alphanumerikbereich 3 sein, an welchem das nicht identifizierte Zeichen wiedergegeben werden sollte. Im Beispiel gemäß FIG 1 erscheint das △ rechts neben der "2". Die dem gelesenen Bildpunktmuster des Zeichens "7" entsprechenden Bildsignale werden nun nacheinander in den Graphikspeicher 18 eingeschrieben, wobei die Speicheradressierung vom Zeichenleser 5 über den Adreßbus 9 erfolgt. Nach dem Ende der Abtastung ist somit in aufeinanderfolgenden Speicherplätzen das Bildpunktmuster des nicht identifizierten Zeichens im Graphikspeicher 18 abgelegt.

Die Wiedergabe des Alphanumerikbereichs 3 erfolgt auf bekannte Weise durch Auslesen des Bildwiederholspeichers 25. Während der Wiedergabe werden die Zeilen und Zeichen innerhalb der Zeile gezählt. Nach der vorgegebenen Anzahl erfolgt die Umschaltung zur Wiedergabe des Graphikbereichs 4. Zu diesem Zeitpunkt ist der erste Zeichenzähler 30 und der erste Zeilenzähler 31 auf eine Anfangsadresse des Graphikspeichers 18 zurückgesetzt. Die unter dieser Adresse abgespeicherten zweiten Zeichensignale werden unmittelbar dem Videoteil 19 zugeführt. Durch den Zeichentakt und den Horizontalsynchronisierimpuls werden die Adressen des Graphikspeichers 18 weitergezählt und die jeweiligen Speicherplätze ausgelesen, bis die beiden Zähler einen Zählerstand erreicht haben, an welchem die Rückschaltung in den Alphanumerikbereich 3 erfolgt. Falls beim Lesen der Vorlage durch den Zeichenleser 5 alle Zeichen identifiziert werden und somit kein Zurückweisungszeichen auftritt, wird kein Bildpunktmuster im Graphikbereich 4 wiedergegeben.

8 Patentansprüche
3 Figuren

Patentansprüche

1. Steuerschaltung für ein Sichtgerät einer Texterfassungseinrichtung, bestehend aus einem Datensichtgerät zur kombinierten Wiedergabe von alphanumerischen Zeichen in einem Alphanumerikbereich (3) und von graphischen Zeichen in einem Graphikbereich (4) des Bildschirms, aus einer Kontrolleinheit (7) zum Erzeugen eines Zeichentaktes und Horizontal-Synchronisierimpulsen und aus einem Zeichengenerator (6) für alphanumerische Zeichen, an den ein Videoteil (19) angeschlossen ist und der mit einem optischen Zeichenleser (5) verbunden ist, dessen binär codierte Zeichensignale im Zeichengenerator (6) in Videosignale für den Videoteil (19) umgesetzt werden, d a - d u r c h   g e k e n n z e i c h n e t , daß der Zeichenleser (5) mit einem Graphikspeicher (18) verbunden ist, der abhängig vom Auftreten eines vom Zeichenleser (5) abgegebenen Zurückweisungszeichen mit binär codierten, dem Bildpunktmuster des gelesenen Zeichens entsprechenden Bildsignalen unter Steuerung des Zeichenlesers 85) beschreibbar und abhängig vom Auftreten mindestens eines Taktsignals der Kontrolleinheit (7) unter Steuerung einer Zählkette (10) an den Videoteil (19) auslesbar ist und daß der Zeichengenerator (6) während des Lesevorgangs deaktivierbar ist.

2. Steuerschaltung nach Anspruch 1, d a d u r c h g e k e n n z e i c h n e t , daß der Zeichenleser (5), der Graphikspeicher (18), der Videoteil (19) und der Zeichengenerator (6) gemeinsam an einen Datenbus (8) angeschlossen sind.

3. Steuerschaltung nach einem der Ansprüche 1 oder 2,

g e k e n n z e i c h n e t  durch zwei mit dem Zeichenleser (5) bzw. mit der Zählkette (10) verbundene Adreßbusse (9, 15), die über eine Multiplexeranordnung (16) wechselweise zum Graphikspeicher (18) durchschaltbar sind.

4. Steuerschaltung nach einem der vorhergehenden Ansprüche, d a d u r c h  g e k e n n z e i c h n e t , daß die Multiplexeranordnung (16) abhängig vom Zählerstand der Zählkette (10) umschaltbar ist.

5. Steuerschaltung nach einem der vorhergehenden Ansprüche, d a d u r c h  g e k e n n z e i c h n e t , daß die Zählkette (10) mindestens einen ersten Zeilenzähler (31) aufweist, der eingangsseitig mit dem von der Kontrolleinheit (7) erzeugten Horizontal-Synchronisierimpuls beaufschlagbar ist und dessen Ausgänge am zugehörigen Adreßbus (15) liegen.

6. Steuerschaltung nach Anspruch 5, d a d u r c h  g e k e n n z e i c h n e t , daß die Zählkette (10) einen zweiten Zeilenzähler (32) aufweist, dessen Ausgänge so geschaltet sind, daß bei einem vorgebbaren Zählerstand der Graphikspeicher (18) und der erste Zeilenzähler (31) aktivierbar sowie die Ausgänge des Zeichengenerators (6) deaktivierbar sind.

7. Steuerschaltung nach einem der vorhergehenden Ansprüche, d a d u r c h  g e k e n n z e i c h - n e t , daß die Zählkette (10) mindestens einen ersten Zeichenzähler (30) aufweist, der eingangsseitig mit dem von der Kontrolleinheit (7) erzeugten Zeichentakt beaufschlagt ist und dessen Ausgänge am Adreßbus (15) liegen.

0107084

8. Steuerschaltung nach Anspruch 7, d a d u r c h
g e k e n n z e i c h n e t , daß die Zählkette (10)
einen zweiten Zeichenzähler (37) aufweist, dessen
Ausgänge so geschaltet sind, daß bei einem vorgebbaren Zählerstand der Graphikspeicher (18) und der
erste Zeichenzähler (30) aktivierbar, sowie der
Ausgang des Zeichengenerators (6) deaktivierbar sind.

FIG 1

0107084

2/3

FIG 2

FIG 3

0107084

3/3